# DEMANDE DE BREVET EUROPEEN

(11) **EP 1 796 008 A1**
(43) Date de publication de la demande: **13.06.2007**
(21) Numéro de dépôt: 05301035.1
(22) Date de dépôt: 08.12.2005
(51) Int. Cl.: G06F 17/27

(54) **Procédé pour extraire automatiquement des données de carte de visite, parmi les données d'un fichier électronique**

(71) Demandeur: Alcatel Lucent, 75008 Paris (FR)
(72) Inventeur: Larvet, Philippe, 91470 Forges les Bains (FR)
(74) Mandataire: Sciaux, Edmond

(57) **Abrégé**

Il consiste à :
- rechercher dans ces données des chaînes de caractères qui sont particulièrement caractéristiques d'informations d'identification d'une personne, ces chaînes étant appelées « pivots » :
-- α) Une chaîne de N chiffres consécutifs suivie d'au moins un espace et précédée d'au moins un espace, le nombre N étant un paramètre prédéterminé par l'utilisateur, adapté à la structure des codes postaux rencontrés par un utilisateur ;
-- b) Une chaîne d'au moins P chiffres consécutifs, suivie d'au moins un espace et précédée d'au moins un espace, avec éventuellement des caractères spéciaux intercalés tel que espace, barre, virgule, tiret, point ; le nombre P adapté à la structure des numéros rencontrés par un utilisateur ;
-- c) Une chaîne de caractères comportant le caractère arobase « @ » précédé d'une chaîne de caractères comportant un point, et suivi d'une chaîne de caractères comportant un point ;

- puis extraire toutes les lignes situées à une distance prédéterminée de chaque « pivot » détecté au cours de l'étape précédente, puis reconnaître et extraire des information d'identification parmi les lignes extraites.

## Description

L'invention concerne un procédé pour extraire automatiquement des données de carte de visite, parmi les données d'un fichier électronique donné.

L'utilisateur d'un ordinateur personnel possède généralement un carnet d'adresses, sous la forme d'un fichier informatique stocké dans cet ordinateur.

Ce fichier informatique comporte une partie dédiée respectivement à chaque personne. La technologie utilisée pour constitué un tel fichier est généralement la technologie vCard qui est définie par les normes RFC 2425 et RFC 2426 de l'Internet Mail Consortium. Cette technologie a été créée pour définir des cartes de visites électroniques, appelées vCards, échangeables entre ordinateurs, par exemple. Dans un carnet d'adresses, la partie dédiée à une personne est appelée objet vCard, et est analogue à une carte de visite électronique. D'ailleurs, un carnet d'adresses peut être constitué en enregistrant successivement des cartes de visite électroniques, dans un fichier carnets d'adresses, au moyen d'un logiciel classique appelé gestionnaire de carnet d'adresses ou gestionnaire de contacts.

Une autre façon de constituer un carnet d'adresses est d'utiliser un gestionnaire de carnet d'adresses, en saisissant au clavier toutes les informations.

Chaque carte de visite électronique peut contenir : un nom, des prénoms, des numéros de téléphone fixe, de téléphone mobile, de fax ; une ou plusieurs adresses électroniques ; une ou plusieurs adresses physiques ; un logo ; une photo ; un fichier sonore ; etc. Les données susceptibles d'être stockées dans un carnet d'adresses sont donc très nombreuses, et on ne les trouve pas toujours sous la forme d'objets vCards déjà constitués. On trouve souvent le nom et un numéro de téléphone de quelqu'un au milieu d'un document quelconque. Il est fastidieux de les saisir par une frappe au clavier, au fur et à mesure que l'on trouve de telles informations en lisant un document. Il serait souhaitable d'extraire et de collecter automatiquement ces données dans un carnet d'adresses, directement à partir de fichiers électroniques stockés dans un ordinateur, c'est à dire sans qu'un utilisateur humain ait à parcourir le document.

Il n'y a pas de procédé entièrement automatique pour réaliser cette opération. On connaît des logiciels, appelés moteurs de recherche, capables de retrouver des mots donnés, en analysant tous les fichiers, d'un type donné, stockés sur un ordinateur. Un tel logiciel permet de retrouver des informations déjà rassemblées sous la forme d'un objet vCard, mais ne permet pas de rassembler des informations dispersées, par exemple le nom et un numéro de téléphone dans un document, le nom et l'adresse postale dans un autre document. Il ne permet pas non plus d'enregistrer automatiquement, les informations trouvées, dans un carnet d'adresses, personne par personne.

Le but de l'invention est de proposer un procédé pour extraire automatiquement des données de carte de visite, à partir d'un fichier électronique donné.

L'objet de l'invention est un procédé pour extraire automatiquement des données de carte de visite, parmi les données d'un fichier électronique ; caractérisé en ce qu'il consiste à :
- rechercher dans ces données des chaînes de caractères qui sont particulièrement caractéristiques d'informations d'identification d'une personne, ces chaînes étant appelées « pivots » :
   -- a) Une chaîne de N chiffres consécutifs suivie d'au moins un espace et précédée d'au moins un espace, le nombre N étant un paramètre prédéterminé par l'utilisateur, adapté à la structure des codes postaux rencontrés par un utilisateur ;
   -- b) Une chaîne d'au moins P chiffres consécutifs, suivie d'au moins un espace et précédée d'au moins un espace, avec éventuellement des caractères spéciaux intercalés tel que espace, barre, virgule, tiret, point ; le nombre P adapté à la structure des numéros rencontrés par un utilisateur ;
   -- c) Une chaîne de caractères comportant le caractère arobase « @ » précédé d'une chaîne de caractères comportant un point, et suivi d'une chaîne de caractères comportant un point ;
- puis extraire toutes les données situées à une distance prédéterminée de chaque « pivot » détecté au cours de l'étape précédente, puis reconnaître et extraire des information d'identification parmi les lignes extraites.

Le procédé ainsi caractérisé permet d'extraire automatiquement des données de carte de visite, à partir d'un fichier électroniques donné, parce qu'il réussit, dans une première étape, à localiser grossièrement les informations recherchées, en recherchant des « pivots » ; puis il affine la recherche en la centrant sur une quantité de données très limitée : les lignes situés à proximité de chaque « pivot » détecté au cours de la première étape.

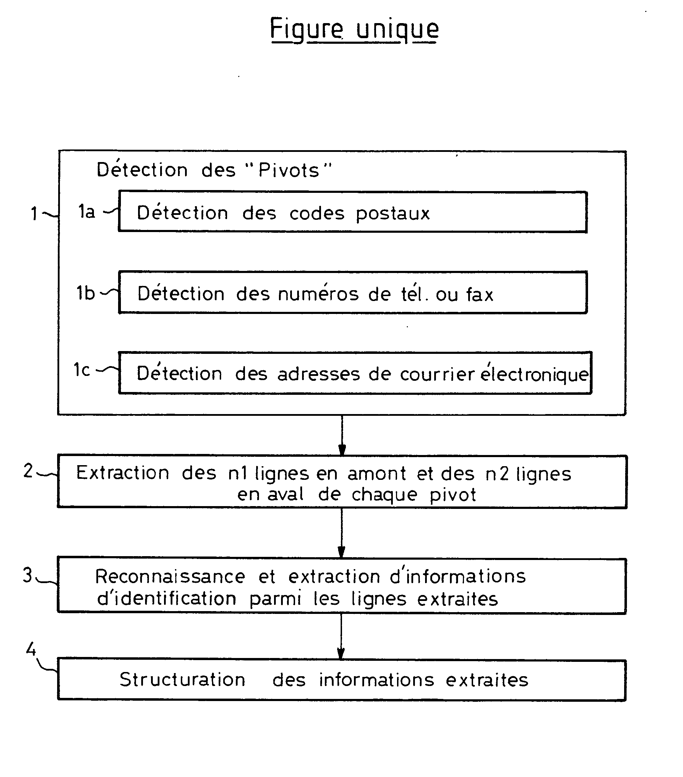

L'invention sera mieux comprise et d'autres caractéristiques apparaîtront à l'aide de la description ci-dessous et de la figure unique l'accompagnant. Cette figure illustre un exemple de mise en oeuvre du procédé selon l'invention, cet exemple consistant à :
1) Rechercher dans le texte considéré des chaînes de caractères qui sont particulièrement caractéristiques d'informations d'identification d'une personne (physique ou morale). Parce qu'elles sont particulièrement caractéristiques, ces chaînes de caractères sont considérés comme les « pivots » de toute portion de texte contenant des information d'identification d'une personne. Cette recherche des « pivots » dans un texte peut être faite au moyen d'un module logiciel classique. Trois « pivots » sont à rechercher :
   -- a) Une chaîne de N chiffres consécutifs suivie d'au moins un espace et précédée d'au moins un espace. Le nombre N est un paramètre prédéterminé par l'utilisateur. Un utilisateur français qui utilise essentiellement des codes postaux français fixera N=5 parce que toute chaîne de cinq chiffres, dans les documents de cet utilisateur, aura une forte probabilité d'être un code postal français. Le nombre de chiffres, ou de lettres et chiffres, varie selon les pays. Il doit être adapté à la structure des codes postaux rencontrés par l'utilisateur. Optionnellement, il peut être prévu une vérification de cohérence par rapport à certaines règles de constitution d'un code postal. Par exemple, un code postal français commence toujours pas deux chiffres dont la valeur est comprise entre 01 et 95.
   -- b) Une chaîne d'au moins P chiffres consécutifs, suivie d'au moins un espace et précédée d'au moins un espace, avec éventuellement des caractères spéciaux intercalés (espace, barre, virgule, tiret, point), le nombre P étant prédéterminé et choisi parce qu'une chaîne de P chiffres a une forte probabilité d'être un numéro de téléphone ou de fax. Le nombre de chiffres utilisés varie selon les pays. Le nombre P doit être adapté à la structure des numéros rencontrés par l'utilisateur. Un nombre P= 10 convient dans la plupart des pays. Optionnellement, il peut être prévu une vérification de cohérence par rapport à certaines règles de constitution d'un numéro de téléphone. Par exemple, un numéro de téléphone français commence toujours par deux chiffres dont la valeur est prise dans la liste : 01, 02, 03, 04, 05, 06, 08, 33.
   -- c) Une chaîne de caractères comportant le caractère arobase « @ » précédé d'une chaîne de caractères comportant un point, et suivi d'une chaîne de caractères comportant un point, parce qu'elle a une forte probabilité d'être une adresse de courrier électronique. La longueur de la chaîne à rechercher est fixée, par exemple, à vingt caractères en amont et vingt caractères en aval du caractère « @ ».
2) Extraire toutes les données situées à une distance prédéterminée de chaque « pivot » détecté au cours de l'étape précédente, cette distance étant exprimée en nombre de lignes de texte ou en nombre de mots. Par exemple, extraire tous les caractères situés sur les n1 lignes en amont et sur les n2 lignes en aval de la ligne contenant le « pivot », n1 et n2 étant des paramètres dont les valeurs sont fonctions du type de « pivot» détecté. Si le « pivot » détecté est un code postal, on peut fixer n1 =10 et n2 = 5 pour avoir de bonnes chances de trouver une adresse postale complète et ne pas extraire d'informations inutiles.
3) Reconnaître et extraire des informations d'identification parmi les données extraites au cours de l'étape précédente. Cette opération est réalisée de préférence ligne par ligne.
   --a) Rechercher une chaîne de caractères par comparaison avec une liste prédéterminée de prénoms. Extraire tout prénom trouvé, et extraire la chaîne de caractère qui le précède et la chaîne de caractères qui le suit, sur la même ligne car ces chaînes de caractères contiennent généralement un patronyme. Le plus souvent une telle ligne contient seulement : Nom + Prénom ou Prénom + Nom, sans autres données.
   --b) Rechercher une chaîne de caractères par comparaison avec une liste prédéterminée de mots caractéristiques d'une adresse : « rue », « boulevard », « place », « impasse », « résidence », etc. Extraire toute la ligne car, le plus souvent, une telle ligne contient seulement des informations d'adresse physique.
   --c) Rechercher un numéro de téléphone, comme indiqué au paragraphe 1b pour trouver un « pivot ». Extraire toute la ligne car, le plus souvent, une telle ligne contient seulement un numéro et l'indication « tel » ou « fax ».
   --d) Rechercher un code postal, comme indiqué au paragraphe 1c pour trouver un « pivot ». Extraire toute la ligne car, le plus souvent, une telle ligne contient seulement un code postal et un nom de ville.
   --e) Rechercher une adresse de courrier électronique, comme indiqué au paragraphe 1d pour trouver un «pivot». Extraire toute la ligne car, le plus souvent, une telle ligne contient seulement une adresse électronique.
   --f) Optionnellement, si on veut rechercher une date de naissance qu'on peut souhaiter ajouter dans un carnet d'adresses en vue d'un recrutement par exemple, rechercher une date, selon un procédé classique de reconnaissance des formats utilisés couramment pour les dates. Puis rechercher des chaînes de caractères « né le », « née le », « date de naissance », en amont de la date. Si une telle chaîne de caractère est trouvée, extraire cette ligne car elle indique une date de naissance.
   --g) Optionnellement, si on veut rechercher d'autres informations complémentaires qu'on peut souhaiter ajouter dans un carnet d'adresses en vue d'un recrutement par exemple, rechercher une chaîne de caractères par comparaison avec une liste prédéterminée de mots caractéristiques des informations complémentaires ; par exemple : « permis de conduire », loisirs », « langues », « obligations militaires », etc. Extraire toute la ligne chaque fois qu'une telle chaîne est trouvée car, le plus souvent, une telle ligne contient seulement une rubrique.
4) Structurer les informations extraites selon une syntaxe prédéterminée, de préférence la syntaxe normalisée pour la vCard. Par exemple, on obtient une vCard de la forme suivante :
   *begin:vcard*
   *fn: Christine Dupont*
   *n:Dupont;Christine*
   *org:Ecole des Mines de Nantes;Direction de la Recherche, de*
   *l'Innovation et du Transfert de Technologie*
   *adr 1:4, rue Alfred Kastler, B. P.20722*
   *adr2:44307 NANTES Cedex* 03
   *email;internet:christine.brassart@emn.fr*
   *tel;work:02.51.85.00.00*
   *tel;fax:02.51.85.11.11*
   *version:2.1*
   *end:vcard*

## Revendications

1. Procédé pour extraire automatiquement des données de carte de visite, parmi les données d'un fichier électronique ; **caractérisé en ce qu'**il consiste à :
- rechercher (1) dans ces données des chaînes de caractères qui sont particulièrement caractéristiques d'informations d'identification d'une personne, ces chaînes étant appelées « pivots » :
-- a) Une chaîne de N chiffres consécutifs suivie d'au moins un espace et précédée d'au moins un espace, le nombre N étant un paramètre prédéterminé par l'utilisateur, adapté à la structure des codes postaux rencontrés par un utilisateur ;
-- b) Une chaîne d'au moins P chiffres consécutifs, suivie d'au moins un espace et précédée d'au moins un espace, avec éventuellement des caractères spéciaux intercalés tel que espace, barre, virgule, tiret, point ; le nombre P adapté à la structure des numéros rencontrés par un utilisateur ;
-- c) Une chaîne de caractères comportant le caractère arobase « @ » précédé d'une chaîne de caractères comportant un point, et suivi d'une chaîne de caractères comportant un point ;
- puis extraire (2) toutes les données situées à une distance prédéterminée de chaque « pivot » détecté au cours de l'étape précédente, puis reconnaître et extraire (3) des information d'identification parmi les lignes extraites.

2. Procédé selon la revendication 1, **caractérisé en ce que**, pour reconnaître et extraire des information d'identification parmi les données extraites, il consiste à rechercher une chaîne de caractères par comparaison avec une liste prédéterminée de prénoms.

3. Procédé selon la revendication 1, **caractérisé en ce que**, pour reconnaître et extraire des information d'identification parmi les données extraites, il consiste à rechercher une chaîne de caractères par comparaison avec une liste prédéterminée de mots caractéristiques d'une adresse, tels que « rue », « boulevard », « place », « impasse », « résidence », etc.

4. Procédé selon la revendication 1, **caractérisé en ce que**, pour reconnaître et extraire des information d'identification parmi les données extraites, il consiste à rechercher un numéro de téléphone ou de fax.

5. Procédé selon la revendication 1, **caractérisé en ce que**, pour reconnaître et extraire des information d'identification parmi les données extraites, il consiste à rechercher un code postal.

6. Procédé selon la revendication 1, **caractérisé en ce que**, pour reconnaître et extraire des information d'identification parmi les données extraites, il consiste à rechercher une adresse de courrier électronique.

7. Procédé selon la revendication 1, **caractérisé en ce que**, pour reconnaître et extraire des information d'identification parmi les données extraites, il consiste à rechercher une chaîne de caractères par comparaison avec une liste prédéterminée de mots caractéristiques d'informations complémentaires qu'un utilisateur peut souhaiter ajouter dans un carnet d'adresses

8. Moyen de stockage sur lequel est enregistré un programme comportant des instructions qui, lorsqu'elles sont exécutées sur un dispositif programmable, réalisent les étapes selon l'une quelconque des revendications 1 à 7.
